# EUROPEAN PATENT SPECIFICATION

(11) **EP 2 020 698 B1**
(45) Date of publication and mention of the grant of the patent: **26.06.2013**
(21) Application number: 08159120.8
(22) Date of filing: 26.06.2008
(51) Int. Cl.: H01Q 1/38, H01Q 9/04, H01Q 21/30

(54) **Built-in antenna apparatus and portable terminal having the same**
Eingebaute Anntennenvorrichtung und tragbares Endgerät damit
Appareil d'antenne intégrée et terminal portable en disposant

(30) Priority: 27.06.2007 KR 20070063582
(43) Date of publication of application: 04.02.2009
(73) Proprietor: Samsung Electronics Co., Ltd., Suwon-si, Gyeonggi-do, 443-742 (KR)
(72) Inventor: Woo, Jin-Sun, Giheung-gu, Yongin-si Gyeonggi-do (KR)
(74) Representative: Harrison Goddard Foote LLP

(56) References cited:
- EP-A- 1 686 648
- WO-A-2005/101571
- JP-A- 2002 111 344
- JP-A- 2006 270 575

## Description

### BACKGROUND OF THE INVENTION

### 1. Field of the Invention:

The present invention relates to an antenna apparatus for use with a portable terminal. More particularly, the present invention relates to an antenna apparatus for use with a portable terminal that is configured to maximize its distance from the human head to reduce a Specific Absorption Rate (SAR) while realizing radiation characteristics that are the same or better than radiation characteristics realized with a conventional antenna apparatus, and a portable terminal having the same.

### 2. Description of the Related Art:

In recent years, terminals having a variety of functions and designs have been introduced. While trends in terminal design have placed an emphasis on slimness, reduced weight, simplicity, and miniaturization, the functions of terminals have become increasingly diversified. Thus, in order to meet consumers' desires for the trend, efforts are being made to maintain or improve terminal functions while reducing terminal dimensions.

Among the more popular types of terminals are folder type terminals and slide type terminals. This is because, when these types of terminals go into a sleep state, the overall size of the terminals can be reduced by half by folding or sliding sub portions of the terminal with respect to each other.

In some terminals external protrusion type antenna apparatuses have been used. Exemplary protrusion type antenna apparatuses includes a rod antenna (or whip antenna) and a helical antenna which may each be installed on a terminal to protrude outside the terminal by a preset length. However, these types of antennas are vulnerable to damage when the terminals are accidently dropped and the damage causes a deterioration of portability. Thus, in recent years, plate type built-in antennas (so-called "internal antennas" or "intennas") mounted within terminals have become widely used. Efforts are being made to improve the characteristics of built-in antennas while improving assemblability and productivity.

A conventional antenna is known from JP 2006270575.

The plate type built-in antenna apparatus is mounted on a carrier having a preset height and provides a distance between a lower main board and a ground surface, thereby realizing better radiation performance. Further, in recent years, the plate type built-in antenna apparatus is configured to realize multiple bands (e.g., three resonance points) by one radiator. This is achieved because a slot of the radiator can be shaped in various fashions to be adapted to each desired band. For example, one terminal can use three bands, that is, Code Division Multiple Access (CDMA), Personal Communication Service (PCS), and Global Positioning System (GPS), thus increasing in convenience to a user of the terminal.

The multi band antenna apparatus is arranged in a lower portion of a main body, that is, around a speaker in slide type portable terminals, bar type terminals, folder type terminals, etc. More particularly, an antenna radiator is installed in a front portion of the terminal. The above implementations are a result of the trend of designing terminals to be slimmer.

However, the above structure of the antenna apparatus causes a problem since the terminal gets in close contact with the human body when a terminal is in use. More particularly, a physical distance between the human head and an antenna radiator are relatively short, thereby resulting in an undesirable SAR affecting the human body. Also, there is a problem of an increasing size of the antenna radiator due to multiple band use which increases the size of terminal and thus going against the trend of slimmer terminals.

### SUMMARY OF THE INVENTION

An aspect of the present invention is to address at least the above problems and/or disadvantages and to provide at least the advantages described below. Accordingly, one aspect of the present invention is to provide a built-in antenna apparatus and a portable terminal having the same.

Another aspect of the present invention is to provide a built-in antenna apparatus configured to prevent a reduction of radiation characteristics despite a reduction of Specific Absorption Rate (SAR), and a portable terminal having the same.

A further aspect of the present invention is to provide a built-in antenna apparatus configured to realize better radiation characteristics in multiple bands despite no increase in an amount of space needed for installation of an antenna, and a portable terminal having the same.

Yet another aspect of the present invention is to provide a built-in antenna apparatus configured to realize the same or better radiation characteristics and simultaneously reduce an amount of space needed for installation of an antenna, thus contributing to an improvement in performance of a terminal and an increase in its slimness, and a portable terminal having the same.

The above aspects are addressed by providing a built-in antenna apparatus and a portable terminal having the same.

According to one aspect of the present invention, a built-in antenna apparatus of a portable terminal is provided. The apparatus includes a substrate, an antenna carrier, a plate type antenna radiator operating in at least one resonance band, and at least one sub antenna radiator. The substrate has a feeding pad for electrically coupling with a Radio Frequency (RF) connector. The antenna carrier establishes a preset distance from the substrate. The plate type antenna radiator is disposed on the antenna carrier and electrically coupled to the feeding pad. The at least one sub antenna radiator electrically couples with the plate type antenna radiator and is disposed on the substrate. The plate type antenna radiator is disposed on the antenna carrier such that the plate type antenna radiator is located in a direction perpendicular to a plane of the substrate when mounted on the substrate.

According to another aspect of the present invention, a portable terminal is provided. The terminal includes a body comprising a substrate and a multi band antenna apparatus built disposed in an internal space within the body. The multi band antenna apparatus includes at least one antenna radiator and at least one sub antenna radiator. The at least one antenna radiator is disposed at a preset distance from the substrate. The at least one sub antenna radiator is disposed on the substrate and operates in a band different from that of the antenna radiator.

In exemplary embodiments of the present invention, a plate type antenna radiator is fixed onto a preset antenna carrier having a preset height. For example, a metal plate type radiator may be fixed onto an antenna carrier of synthetic resin by conventional ultrasonic adhesion. However, this does not intend to limit the scope of the present invention. The antenna carrier may be excluded as long as the plate type radiator can be self-supported at a preset height with respect to a main board.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following detailed description taken in conjunction with the accompanying drawings, in which:

FIG. 1 is a perspective diagram illustrating a slide type portable terminal having an antenna apparatus according to an exemplary embodiment of the present invention;

FIG. 2 is an exploded perspective diagram illustrating an antenna apparatus according to an exemplary embodiment of the present invention;

FIG. 3 is a rear perspective diagram illustrating a substrate applying antenna radiators according to an exemplary embodiment of the present invention; and

FIG. 4 is a schematic diagram illustrating a connection relation between antenna radiators according to an exemplary embodiment of the present invention.

Throughout the drawings, like reference numerals will be understood to refer to like parts, components and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the invention. Also, descriptions of well-known functions and constructions are omitted for clarity and conciseness.

In the following description of exemplary embodiments of the present invention, a slide type portable terminal is shown and described as an example. However, the present invention is equally applicable to any type of portable terminals that can apply a built-in antenna apparatus.

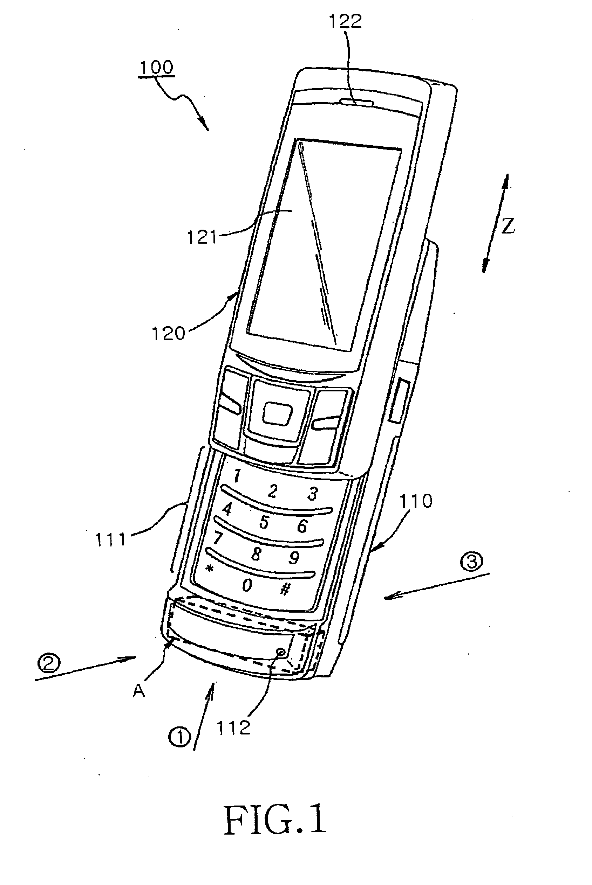

FIG. 1 is a perspective diagram illustrating a slide type portable terminal having an antenna apparatus according to an exemplary embodiment of the present invention.

As shown in FIG. 1, a slide type portable terminal 100 includes a main body 110 and a slide body 120 that slides up/down on the main body 110 in a lengthwise direction of the terminal 100, that is, in a direction indicated by axis Z.

As a data input unit, a keypad assembly 111 including a plurality of key buttons is installed on a surface of the main body 110 that is viewed when the slide body 120 is slid up. A microphone 112 is installed below the keypad assembly 111 and receives a user's voice.

A display unit 121 is installed in a front surface of the slide body 120. A speaker 122 is installed above the display unit 121 and reproduces a caller's voice.

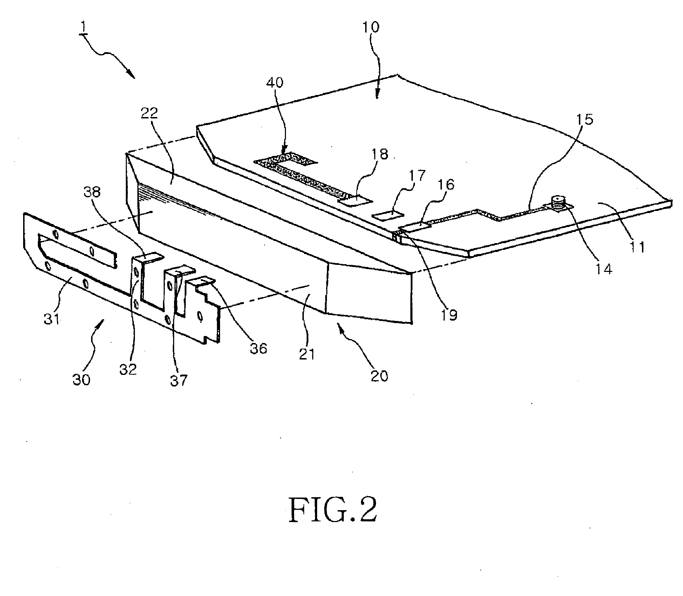

The antenna apparatus (1 in FIG. 2) according to an exemplary embodiment of the present invention is installed at a bottom portion A of the main body 110. The antenna apparatus 1, a built-in antenna apparatus, can be installed close to the microphone 112. Though being described later, the antenna apparatus 1 may have plate type antenna radiators that are installed with a preset height with respect to a substrate by a preset antenna carrier.

In an exemplary embodiment of the present invention, the terminal 100 may operate at multiple bands. For example, the terminal 100 may selectively operate at a plurality of different frequency bands, such as those utilized by Code Division Multiple Access (CDMA), Personal Communication service (PCS), and Global Positioning System (GPS). Thus, the built-in antenna apparatus 1 has to be installed such that it operates at the above various frequency bands.

In an exemplary embodiment of the present invention, the entire portions of the antenna for each of the multiple bands are not constructed in one radiator. Instead, a portion of the antenna for each of the multiple bands is constructed on the substrate on which the radiator is installed. The resulting radiation plate is smaller than that found in the conventional art, thus reducing a volume of the terminal. Further, unlike the conventional art in which multi band antenna radiators are installed with a protrusion disposed toward the user's body, a portion of multi band antenna radiators is installed on the substrate which is located away from the user's body, thereby effectively reducing the SAR affecting the human body.

More particularly, as shown in FIG. 1, one antenna radiator is installed to face an arrow direction ① of FIG. 1 and other remaining antenna radiators on the substrate are scattered and installed to face arrow directions ② and ③ of FIG. 1, thereby minimizing the SAR affecting the human body while the terminal is being operated and mutually coupled to have better radiation characteristics.

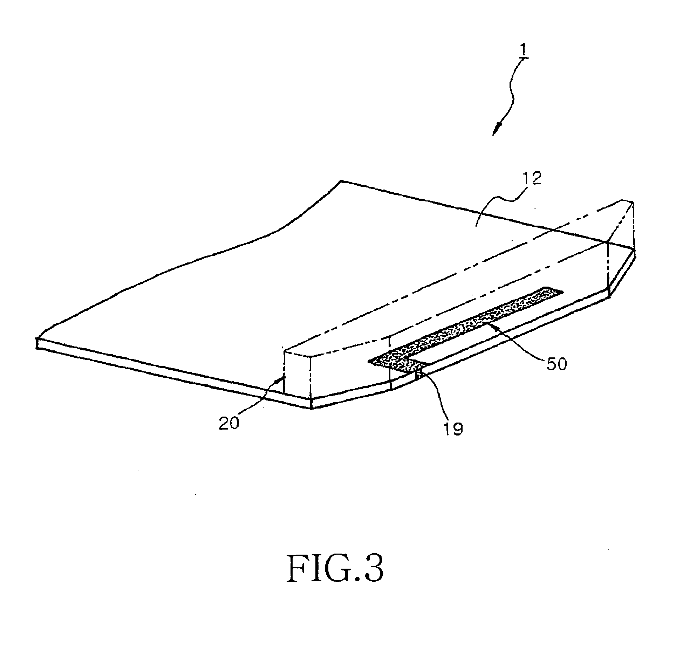

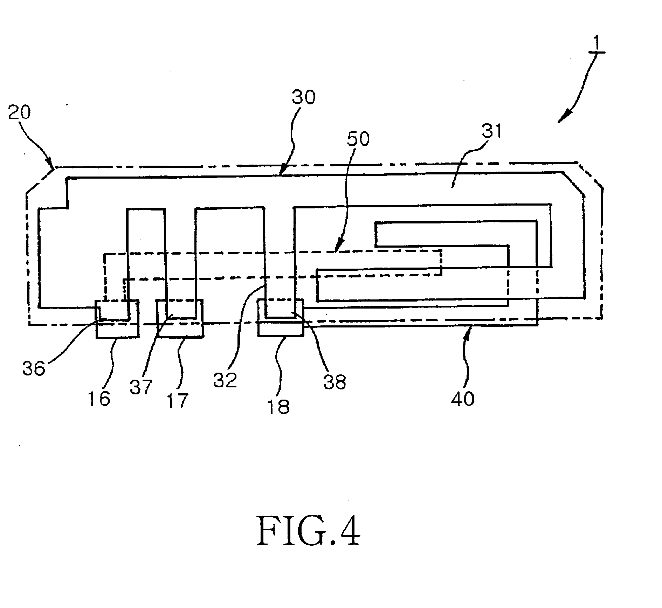

FIG. 2 is an exploded perspective diagram illustrating an antenna apparatus 1 according to an exemplary embodiment of the present invention. FIG. 3 is a rear perspective diagram illustrating a substrate applying antenna radiators according to an exemplary embodiment of the present invention. FIG. 4 is a schematic diagram illustrating a connection relation between the antenna radiators according to an exemplary embodiment of the present invention.

As shown in FIGs. 2 to 4, the built-in antenna apparatus 1 includes a substrate 10, an antenna carrier 20, a first antenna radiator 30, and sub antenna radiators 40 and 50. The substrate 10 is a Radio Frequency (RF) board mounted within a terminal. The antenna carrier 20 is installed on the substrate 10. The first antenna radiator 30 is fixed to the antenna carrier 20. The sub antenna radiators 40 and 50 each correspond to at least one different frequency band realized in the substrate 10.

A feeding pad 16 and a ground pad 17 are formed at one surface 11 of the substrate 10. The feeding pad 16 electrically connects by a preset pattern 15 with an RF connector 14 installed in the substrate 10. The ground pad 17 also electrically connects with a ground part (not shown) formed in the substrate 10. This may be useful if the first antenna radiator 30 fixed to a top of the antenna carrier 20 is, for example, a radiator needing a ground part such as a Planar Inverted F Antenna (PIFA). A branch pad 18 forming a part of an exemplary embodiment of the present invention is provided at one side of the ground pad 17. The branch pad 18 is formed on the substrate 10 and electrically connects with the second antenna radiator 40 operating at a frequency band different from that of the first antenna radiator 30.

The feeding pad 16, as shown in FIG. 3, electrically connects by a preset pattern 19 with the third antenna radiator 50 disposed at the other surface 12 of the substrate 10. The third antenna radiator 50 may operate at a band different from those of the first and second antenna radiators 30 and 40.

In FIG. 1, the pattern 19 electrically connects with the third antenna radiator 50 by bypassing the substrate 10 from the feeding pad 16 formed in the surface 11 of the substrate 10 to the other surface 12 of the substrate 10.

However, this does not intend to limit the scope of the present invention. For example, an electrical connection unit, a metal via or the like may be also used. For example, the metal via would electrically connect at one of its ends to the third antenna radiator 50 disposed in rear of the substrate 10 and electrically connect up to the feeding pad 16 by passing through the substrate 10.

The first antenna radiator 30 includes a metal radiation plate 31, a battery feed fin 36, a ground fin 37, and a branch fin 38. The radiation plate 31 has radiation form based on a slot of a preset shape. The battery feed fin 36 and the ground fin 37 are each bent and formed at one side of the radiation plate 31. The branch fin 38 is bent downward by a preset branch 32 and is integrally formed in about the middle of the radiation plate 31. Thus, when the first antenna radiator 30 is fixed to the antenna carrier 20 and then the antenna carrier 20 is mounted on the surface 12 of the substrate 10, the battery feed fin 36, the ground fin 37, and the branch fin 38 of the first antenna radiator 30 are each in contact with the feeding pad 16, the ground pad 17, and the branch pad 18 formed in the surface 11 of the substrate 10, thus achieving electrical connection.

The antenna carrier 20 may be constructed of synthetic resin and comprises a mounting surface 21 and a side surface 22. The mounting surface 21 is used to mount the first antenna radiator 30 thereon. The side surface 22 is extended and formed along an edge of the mounting surface 21. Thus, the antenna carrier 20 provides a physical isolation between the first antenna radiator 30 and the substrate 10. More particularly, the first antenna radiator 30 is located in a direction perpendicular to a plane of the substrate 10 when mounted on the substrate 10. The first antenna radiator 30 may be implemented as a PIFA type radiator having a CDMA resonance band and may be limited to having a physical isolation distance from the ground part of the substrate 10. Also, the first antenna radiator 30 may be fixed by an ultrasonic adhesion process, etc. on the antenna carrier 20.

The second and third antenna radiators 40 and 50 may be formed as micro strip lines having preset patterns on the substrate 10. However, this is not intended to limit the scope of the present invention. For example, the second and third antenna radiators 40 and 50 may be formed by bonding or soldering a Flexible Printed Circuit (FPC) or using a metal plate having a preset radiation pattern on the substrate 10.

The second antenna radiator 40 can be formed to be operable at a GPS resonance band and the third antenna radiator 50 can be formed to be operable at a PCS resonance band. In addition, antenna radiators of a diversity of types that are operable at various bands and can be formed on the substrate 10.

The second and third antenna radiators 40 and 50 can be installed in free positions on the substrate 10, however, they may be installed in very close positions for their respective mutual coupling.

The second antenna radiator 40 may be formed in the one surface 11 of the substrate 10 and the third antenna radiator 50 may be formed in the other surface 12 of the substrate 10 in an exemplary embodiment of the present invention. However, two or more antenna radiators can be installed close together in one surface of the substrate 10.

**Table 1**

| Band | Output | Section | Position | SAR Test Result = 1g (1.6g↓) | | | | | |
|---|---|---|---|---|---|---|---|---|---|
| | | | | Sample No. | Type | SAR | Sample No. | Type | SAR |
| PCS 600CH | 25dBm | Left | Touch | #1 | Slide down | 4.10 | #2 | Slide down | 5.41 |
| CDMA 779CH | 25dBm | Right | Touch | #1 | Slide down | 1.64 | #2 | Slide down | 2.15 |

**Table 2**

| Band | Output | Section | Position | SAR Test Result = 1g (1.6g↓) | | | | | |
|---|---|---|---|---|---|---|---|---|---|
| | | | | Sample No. | Type | SAR | Sample No. | Type | SAR |
| PCS 600CH | 25dBm | Left | Touch | #1 | Slide down | 0.719 | #2 | Slide down | 0.838 |
| CDMA 779CH | 25dBm | Right | Touch | #1 | Slide down | 0.795 | #2 | Slide down | 0.794 |

Tables 1 and 2 show comparisons of SAR between an antenna apparatus according to the conventional art and an antenna apparatus according to en exemplary embodiment of the present invention.

It should be appreciated that, when compared at the same band in a state where a slide body is slid down, a conventional SAR value is equal to 4.10 W/kg at a band of PCS 600CH, while this is reduced to 0.719 W/kg in the antenna apparatus according to an exemplary embodiment of the present invention. It should also be appreciated that this meets the requirements of not exceeding Korean and U.S.A. SAR standards of 1.6 W/kg, and Japanese SAR standard of 2.0 W/kg.

Also, it could be appreciated that, when compared at the same band in a state where a slide body is slid down, a conventional SAR value is equal to 1.64 W/kg at a band of CDMA 779CH, while this is reduced to 0.795 W/kg in the antenna apparatus according to an exemplary embodiment of the present invention.

As described above, a multi band antenna apparatus of exemplary embodiments of the present invention has an effect of, by installing a portion of the antenna radiators on a substrate, being capable of increasing a contact distance from the human body on call and thus reducing SAR, and reducing a volume required for installation of an antenna radiator and thus securing a space for mounting other parts in a terminal and slimming the terminal.

While the invention has been shown and described with reference to certain exemplary embodiments thereof, it will be understood by those skilled in the art that various changes in form and details may be made therein without departing from the scope of the invention as defined by the appended claims and their equivalents.

## Claims

1. A built-in antenna apparatus(1) of a portable terminal(100), the apparatus(1) comprising:
a substrate(10) having a feeding pad(16) for electrically coupling with a Radio Frequency (RF) connector(14);
an antenna carrier(22) for establishing a preset distance from the substrate(10);
a plate type antenna radiator(30) disposed on the antenna carrier(22) for operating in at least one resonance band and for electrically coupling to the feeding pad(16); and
at least one sub antenna radiator(40, 50) disposed on the substrate(10) for electrically coupling with the plate type antenna radiator(30), characteried in that
the plate type antenna radiator (30) is disposed on the antenna carrier (22) such that the plate type antenna radiator (30) is located in a direction perpendicular to a plane of the substrate (10) when mounted on the substrate (10).

2. The built-in antenna apparatus as claimed in claim 1, wherein the sub antenna radiator comprises at least one of a pattern disposed in the substrate and a flexible printed circuit or metal plate having a preset pattern and bonded to the substrate.

3. The built-in antenna apparatus as claimed in claim 1 or claim 2, wherein the sub antenna radiator comprises first and second sub antenna radiators, each operating on a different band.

4. The built-in antenna apparatus as claimed in claim 3, wherein the first sub antenna radiator electrically couples with a radiation plate of the plate type antenna radiator.

5. The built-in antenna apparatus as claimed in claim 4, further comprising:
a branch pad disposed at an end of the first sub antenna radiator;
a branch of a preset length extended and disposed on the radiation plate of the plate type antenna radiator; and
a branch fin bent and disposed at an end of the branch,
wherein when the carrier is disposed on the substrate, the branch fin is physically and electrically coupled with the branch pad.

6. The built-in antenna apparatus as claimed in any preceding claim, wherein the plate type antenna radiator operates at a Code Division Multiple Access (CDMA) band and the first sub antenna radiator operates at a Global Positioning System (GPS) band.

7. The built-in antenna apparatus as claimed in claim 4, wherein the second sub antenna radiator electrically couples with the feeding pad of the substrate by a preset electrical connection unit.

8. The built-in antenna apparatus as claimed in claim 7, wherein the second sub antenna radiator is disposed on a surface that is opposite to a surface of the substrate on which the first sub antenna radiator is disposed, and each of the first and second sub antenna radiators is disposed in close proximity to the plate type antenna radiator for mutual coupling.

9. The built-in antenna apparatus as claimed in claim 7 or claim 8, wherein the electrical connection unit comprises a conductive pattern bypassing the substrate from an end of the second sub antenna radiator to the feeding pad.

10. The built-in antenna apparatus as claimed in any preceding claim, wherein the plate type antenna radiator operates at a CDMA band and the second sub antenna radiator operates at a Personal Communication Service (PCS) band.

11. The built-in antenna apparatus antenna as claimed claim 7 or claim 8, wherein the electrical connection unit comprises a metal via passing through from an end of the second sub antenna radiator to the feeding pad.

12. A portable terminal provided with the built-in antenna apparatus(1) as claimed in any one of claims 1 to 11.

13. The portable terminal as claimed in claim 12, wherein the built-in antenna apparatus is disposed in a bottom of the portable terminal body.

14. The portable terminal as claimed in claim 12 or claim 13, wherein the portable terminal comprises any one of a bar type terminal, a slide type terminal comprising a slide body, and a folder type terminal comprising a folder.

## Patentansprüche

1. Eingebaute Antennenvorrichtung (1) eines tragbaren Endgeräts (100), wobei die Vorrichtung (1) Folgendes umfasst:
ein Substrat (10) mit einem Versorgungspad (16) zum elektrischen Koppeln mit einem RF-(Radiofrequenz)-Verbinder (14);
einen Antennenträger (22) zum Herstellen einer voreingestellten Distanz von dem Substrat (10);
einen Platten-Antennenstrahler (30), der auf dem Antennenträger (22) angeordnet ist und in wenigstens einem Resonanzband arbeitet und zur elektrischen Kopplung mit dem Versorgungspad (16) dient; und
wenigstens einen Antennen-Substrahler (40, 50), der zur elektrischen Kopplung mit dem Platten-Antennenstrahler (30) auf dem Substrat (10) angeordnet ist, **dadurch gekennzeichnet, dass**
der Platten-Antennenstrahler (30) so auf dem Antennenträger (22) angeordnet ist, dass der Platten-Antennenstrahler (30), wenn er auf dem Substrat (10) montiert ist, in einer Richtung lotrecht zu einer Ebene des Substrats (10) liegt.

2. Eingebaute Antennenvorrichtung nach Anspruch 1, wobei der Antennen-Substrahler ein im Substrat angeordnetes Muster und/oder eine flexible gedruckte Schaltung oder eine Metallplatte mit einem voreingestellten Muster auf das Substrat geklebt umfasst.

3. Eingebaute Antennenvorrichtung nach Anspruch 1 oder Anspruch 2, wobei der Antennen-Substrahler erste und zweite Antennen-Substrahler umfasst, die jeweils in einem anderen Band arbeiten.

4. Eingebaute Antennenvorrichtung nach Anspruch 3, wobei der erste Antennen-Substrahler elektrisch mit einer Strahlungsplatte des Platten-Antennenstrahlers gekoppelt wird.

5. Eingebaute Antennenvorrichtung nach Anspruch 4, die ferner Folgendes umfasst:
ein an einem Ende des ersten Antennen-Substrahlers angeordnetes Zweigpad;
einen Zweig einer voreingestellten Länge, der auf der Strahlungsplatte des Platten-Antennenstrahlers verläuft und dort angeordnet ist; und
eine Zweigrippe, die an einem Ende des Zweigs gebogen und angeordnet ist,
wobei, wenn der Träger auf dem Substrat angeordnet ist, die Zweigrippe physisch und elektrisch mit dem Zweigpad gekoppelt ist.

6. Eingebaute Antennenvorrichtung nach einem der vorherigen Ansprüche, wobei der Platten-Antennenstrahler in einem CDMA-(Code Division Multiple Access)-Band arbeitet und der erste Antennen-Substrahler in einem GPS-(Global Positioning System)-Band arbeitet.

7. Eingebaute Antennenvorrichtung nach Anspruch 4, wobei der zweite Antennen-Substrahler durch eine voreingestellte elektrische Verbindungseinheit elektrisch mit dem Versorgungspad des Substrats gekoppelt wird.

8. Eingebaute Antennenvorrichtung nach Anspruch 7, wobei der zweite Antennen-Substrahler auf einer Oberfläche angeordnet ist, die einer Oberfläche des Substrats gegenüber liegt, auf dem der erste Antennen-Substrahler angeordnet ist, und jeder der ersten und zweiten Antennen-Substrahler in unmittelbarer Nähe zu dem Platten-Antennenstrahler für eine gegenseitige Kopplung angeordnet ist.

9. Eingebaute Antennenvorrichtung nach Anspruch 7 oder Anspruch 8, wobei die elektrische Verbindungseinheit ein leitendes Muster umfasst, das das Substrat von einem Ende des zweiten Antennen-Substrahlers zum Versorgungspad umgeht.

10. Eingebaute Antennenvorrichtung nach einem der vorherigen Ansprüche, wobei der Platten-Antennenstrahler in einem CDMA-Band arbeitet und der zweite Antennen-Substrahler in einem PCS-(Personal Communication Service)-Band arbeitet.

11. Eingebaute Antennenvorrichtung nach Anspruch 7 oder Anspruch 8, wobei die elektrische Verbindungseinheit eine Metalldurchkontaktierung umfasst, die von einem Ende des zweiten Antennen-Substrahlers zum Versorgungspad verläuft.

12. Tragbares Endgerät, das mit der eingebauten Antennenvorrichtung (1) nach einem der Ansprüche 1 bis 11 ausgestattet ist.

13. Tragbares Endgerät nach Anspruch 12, wobei die eingebaute Antennenvorrichtung in einem Boden des tragbaren Endgerätekörpers angeordnet ist.

14. Tragbares Endgerät nach Anspruch 12 oder Anspruch 13, wobei das tragbare Endgerät eines aus einem Bar-Type-Endgerät, einem Endgerät des Schiebetyps mit einem Schiebekörper und einem Endgerät des Klapptyps mit einer Klappvorrichtung umfasst.

## Revendications

1. Appareil d'antenne intégrée (1) d'un terminal portable (100), l'appareil (1) comprenant :
un substrat (10) possédant un plot d'alimentation (16) pour réaliser un couplage électrique avec un connecteur (14) à radiofréquences (RF) ;
un support d'antenne (22) pour établir une distance prédéfinie par rapport au substrat (10) ;
un élément rayonnant d'antenne de type plaque (30), lequel est disposé sur le support d'antenne (22), pour opérer dans au moins une bande de résonance et pour réaliser un couplage électrique vers le plot d'alimentation (16) ; et
au moins un sous-élément rayonnant d'antenne (40, 50), lequel est disposé sur le substrat (10), pour réaliser un couplage électrique avec l'élément rayonnant d'antenne de type plaque (30), **caractérisé en ce que**
l'élément rayonnant d'antenne de type plaque (30) est disposé sur le support d'antenne (22) de sorte que l'élément rayonnant d'antenne de type plaque (30) soit positionné dans un sens qui est perpendiculaire à un plan du substrat, lorsqu'il est monté sur le substrat (10).

2. Appareil d'antenne intégrée selon la revendication 1, le sous-élément rayonnant d'antenne comportant au moins l'un des postes suivants, à savoir un motif disposé dans le substrat et un circuit imprimé souple ou une plaque métallique possédant un schéma prédéfini et liaisonnée au substrat.

3. Appareil d'antenne intégrée selon la revendication 1 ou la revendication 2, le sous-élément rayonnant d'antenne comportant un premier et un second sous-éléments rayonnants d'antenne, chacun opérant sur une bande différente.

4. Appareil d'antenne intégrée selon la revendication 3, le premier sous-élément rayonnant d'antenne réalisant un couplage électrique avec une plaque de rayonnement de l'élément rayonnant d'antenne de type plaque.

5. Appareil d'antenne intégrée selon la revendication 4, comprenant en outre :
un plot de raccord lequel est disposé au niveau d'une extrémité du premier sous-élément rayonnant d'antenne ;
un raccord d'une longueur prédéfinie qui se prolonge et est disposé sur la plaque de rayonnement de l'élément rayonnant d'antenne de type plaque ; et
une patte de raccord qui est recourbée et est disposée au niveau d'une extrémité du raccord,
cas dans lequel, lorsque le support est disposé sur le substrat, la patte de raccord est couplée physiquement et électriquement avec le plot de raccord.

6. Appareil d'antenne intégrée selon l'une quelconque des revendications précédentes, l'élément rayonnant d'antenne de type plaque opérant au niveau d'une bande CDMA (accès multiple par différence de code) et le premier sous-élément rayonnant d'antenne opérant au niveau d'une bande GPS (système de positionnement à capacité globale).

7. Appareil d'antenne intégrée selon la revendication 4, le second sous-élément rayonnant d'antenne réalisant un couplage électrique avec le plot d'alimentation du substrat grâce à une unité de connexion électrique préréglée.

8. Appareil d'antenne intégrée selon la revendication 7, le second sous-élément rayonnant d'antenne étant disposé sur une surface qui est opposée à une surface du substrat sur laquelle le premier sous-élément rayonnant d'antenne est disposé, et chaque sous-élément rayonnant d'antenne, à savoir le premier et le second, étant disposé en proximité étroite par rapport à l'élément rayonnant d'antenne de type plaque en vue d'un couplage mutuel.

9. Appareil d'antenne intégrée selon la revendication 7 ou la revendication 8, l'unité de connexion électrique comportant un motif conducteur lequel contourne le substrat à partir d'une extrémité du second sous-élément rayonnant d'antenne vers le plot d'alimentation.

10. Appareil d'antenne intégrée selon l'une quelconque des revendications précédentes, l'élément rayonnant d'antenne de type plaque opérant au niveau d'une bande CDMA et le second sous-élément rayonnant d'antenne opérant au niveau d'une bande PCS (services de communications personnelles).

11. Antenne de l'appareil d'antenne intégrée selon la revendication 7 ou la revendication 8, l'unité de connexion électrique comportant un trou de liaison métallique qui effectue une traversée depuis une extrémité du second sous-élément rayonnant d'antenne vers le plot d'alimentation.

12. Terminal portable doté de l'appareil d'antenne intégrée (1) selon l'une quelconque des revendications 1 à 11.

13. Terminal portable selon la revendication 12, l'appareil d'antenne intégrée étant disposé dans une partie inférieure du corps du terminal portable.

14. Terminal portable selon la revendication 12 ou la revendication 13, le terminal portable englobant l'un quelconque des postes suivants, à savoir un terminal de type à barre, un terminal de type à coulisse comportant un corps coulissant, et un terminal de type repliable comportant une partie repliable.
